# EUROPÄISCHE PATENTSCHRIFT

(11) **EP 1 423 292 B1**
(45) Veröffentlichungstag und Bekanntmachung des Hinweises auf die Patenterteilung: **23.03.2005**
(21) Anmeldenummer: 02774303.8
(22) Anmeldetag: 30.08.2002
(51) Int. Cl.: B60N 2/12

(54) **KRAFTFAHRZEUGSITZ**
MOTOR VEHICLE SEAT
SIEGE DE VEHICULE AUTOMOBILE

(30) Priorität: 31.08.2001 DE 10143721
(43) Veröffentlichungstag der Anmeldung: 02.06.2004
(73) Patentinhaber: Brose Fahrzeugteile GmbH & Co. KG, Coburg, 96450 Coburg (DE)
(72) Erfinder: TAUBMANN, Werner, 96486 Lautertal (DE); HEIN, Thomas, 96482 Ahorn (DE)
(74) Vertreter: Baumgärtel, Gunnar, Dr.
(86) Internationale Anmeldenummer: PCT/DE2002/003268
(87) Internationale Veröffentlichungsnummer: WO 2003/018349

(56) Entgegenhaltungen:
- WO-A-00/55002
- WO-A-99/41102
- CA-A- 2 097 776
- US-A- 4 671 571
- US-A- 5 597 206

## Beschreibung

Die Erfindung betrifft einen Kraftfahrzeugsitz nach dem Oberbegriff des Patentanspruchs 1 (s. zum Beispiel die US-PS 4,671,571).

Ein derartiger Kraftfahrzeugsitz umfaßt eine schwenkbar gelagerte Rückenlehne, die in Richtung auf eine Sitzfläche des Sitzes vorklappbar ist; eine Sitzlängsverstellung, mit der die Längsposition des Sitzes (Position in Fahrzeuglängsrichtung) einstellbar ist; eine Feststellvorrichtung der Sitzlängsverstellung, mit der eine zuvor eingestellte Sitzlängsposition verriegelbar ist; einen Entriegelungsmechanismus, mit dem die Feststellvorrichtung entriegelbar ist, um eine andere Sitzlängsposition einstellen zu können; sowie ein flexibles Zugmittel, über das der Entriegelungsmechanismus mit der Rückenlehne gekoppelt ist, so daß die Feststellvorrichtung beim Vorklappen der Rückenlehne in Richtung auf die Sitzfläche entriegelt wird.

Bei einem derartigen Fahrzeugsitz kann durch Vorklappen der Rückenlehne auf die Sitzfläche die Feststellvorrichtung entriegelt werden, so daß sich der Sitz nach vorne verschieben läßt, um das Einsteigen von Passagieren in den Fond des Kraftfahrzeugs zu erleichtern. Ein derartiger "Easy-entry-Mechanismus" findet bei zweitürigen Fahrzeugen verbreitet Anwendung.

Hierbei besteht jedoch das Problem, daß von manchen Benutzern der zum Vorklappen der Rückenlehne erforderliche Kraftaufwand als zu hoch empfunden wird. Eine erhebliche Kraft ist insbesondere erforderlich, um die Sitzlängsverstellung zu entriegeln, da deren Verriegelungsmechanismus aus Sicherheitsgründen in der Regel mittels elastischer Elemente in Richtung auf den verriegelten Zustand vorgespannt ist.

Aus der o.f. US-PS 4,671,571 ist ein Entriegelungsmechanismus für eine Easy-Entry-Funktion unter Verwendung eines Zugmittels in Form eines Kabels bekannt. Ein Ende des Kabels wird mit einem beim Vorklappen der Rückenlehne beweglichen Element verbunden, so dass das Kabel beim Vorklappen der Rückenlehne durch die Bewegung seines gemeinsam mit der Rückenlehne oder einem Element des Verstellmechanismus der Rückenlehne bewegbaren Endes gestrafft wird. Dies ist eine übliche Methode zur Straffung eines Zugmittels, bei der eine Zugkraft auf ein Ende des Zugmittels ausgeübt wird.

Der Erfindung liegt das Problem zugrunde, einen Kraftfahrzeugsitz der eingangs genannten Art hinsichtlich des Bedienkomforts zu verbessern.

Dieses Problem wird erfindungsgemäß durch die Schaffung eines Kraftfahrzeugsitzes mit den Merkmalen des Patentanspruchs 1 gelöst.

Danach wirkt beim Vorklappen der Rückenlehne ein Betätigungselement auf das Zugmittel mit einer Kraftkomponente quer zur Erstreckungsrichtung des Zugmittels ein, so daß das Zugmittel gestrafft und die Feststellvorrichtung entriegelt wird. Die Einwirkung des Betätigungselementes auf das Zugmittel erfolgt dabei bevorzugt in der Weise, dass sich das Betätigungselement mit einer Komponente senkrecht zur Erstreckungsrichtung des Zugmittels bewegt und dadurch in der beanspruchten Weise mit dem Zugmittel in Kontakt steht, insbesondere (von oben) gegen dieses drückt.

Im Gegensatz zu den bekannten Mechanismen zur Entriegelung der Sitzlängsverstellung durch Vorklappen der Rückenlehne wird hier also zur Straffung des Zugmittels, durch die die Entriegelung bewirkt werden soll, nicht eine Kraft in Erstreckungsrichtung des Zugmittels auf ein Ende des Zugmittels ausgeübt, sondern vielmehr eine Kraft mit einer Komponente quer zur Erstreckungsrichtung des Zugmittels auf einen Abschnitt des Zugmittels. Die resultierende Kraft muß dabei nicht genau senkrecht zur Erstreckungsrichtung des Zugmittels ausgerichtet sein, wie es einer Ausführungsform entspricht, sondern es ist ausreichend, wenn die durch das Betätigungselement auf das Zugmittel ausgeübte Kraft zumindest eine Kraftkomponente quer zur Erstreckungsrichtung des Zugmittels aufweist.
Bei der erfindungsgemäßen Lösung wird gegenüber den aus dem Stand der Technik bekannten Anordnungen eine Reduzierung der beim Vorklappen der Rückenlehne aufzubringenden Kraft unter Ausnutzung von Effekten erreicht, wie sie auch dem Flaschenzug zugrunde liegen.

Darüber hinaus hat die erfindungsgemäße Anordnung den Vorteil, dass das Zugmittel vollständig am Sitzuntergestell vormontiert werden kann, da keine Verbindung zwischen Zugmittel und Rückenlehne erforderlich ist. Denn die Rückenlehne kann ja über das Betätigungselement auf das am Untergestell befestigte Zugmittel einwirken.

Das Betätigungselement wirkt vorzugsweise auf einen Abschnitt des Zugmittels ein, der von dem lehnenseitigen Ende des Zugmittels beabstandet ist.

Das Betätigungselement ist vorteilhaft rotationssymmetrisch bezüglich einer Achse ausgebildet und um diese Achse drehbar gelagert, was insbesondere durch die Verwendung einer Rolle als Betätigungselement erreicht werden kann. Als Betätigungselement können aber auch bei einem Fahrzeugsitz zu anderen Zwecken ohnehin vorhandene Elemente, wie z. B. ein Achsstummel einer Sitzachse, verwendet werden. Ferner kann das Betätigungselement beispielsweise auch durch einen vorzugsweise aus Kunststoff bestehenden Gleiter gebildet werden.

Zur Einwirkung auf das Zugmittel können für eine möglichst weitgehende Reduzierung der aufzubringenden Kraft mehrere Betätigungselemente vorgesehen sein, die auf das Zugmittel einwirken, ähnlich einem Flaschenzug mit mehreren losen Rollen.

Das Zugmittel selbst wird mit seinem lehnenseitigen Ende an einer geeigneten Befestigungsstelle am Sitzgestell, z. B. an einem Sitzseitenteil, festgelegt. Die Befestigungsstelle ist dabei so zu wählen, daß sie beim Vorklappen der Rückenlehne nicht bewegt wird, insbesondere nicht gemeinsam mit der Rückenlehne verschwenkt wird.

Darüber hinaus ist in einer Weiterbildung der Erfindung ein Umlenkelement vorgesehen, mit dem das Zugmittel derart umgelenkt wird, daß ein Abschnitt des Zugmittels in einem geeigneten Winkel, insbesondere senkrecht, zur Wirkrichtung des Betätigungselementes verläuft. Dieses Umlenkelement wird vorzugsweise durch eine Rolle ("feststehende Rolle") gebildet, die mit dem zur Einwirkung auf das Zugmittel vorgesehenen Betätigungselement zum Erzielen des Flaschenzug-Effektes zusammenwirkt.

Das Betätigungselement kann in einfacher Weise derart angeordnet werden, daß es beim Vorklappen der Rückenlehne durch Verschwenken mit dem Zugmittel in Eingriff bringbar ist. Hierzu ist das Betätigungselement an einem beim Vorklappen der Rückenlehne bewegbaren, insbesondere verschwenkbaren Körper gelagert.

Weiter kann vorgesehen sein, daß die Rückenlehne beim Vorklappen mit einem Mitnehmer auf einen dem Betätigungselement zugeordneten Anschlag einwirkt, um das Betätigungselement mit dem Zugmittel in Eingriff zu bringen. Mitnehmer und Anschlag sind dabei derart positioniert, daß der Entriegelungsvorgang erst nach dem Vorklappen der Rückenlehne um einen bestimmten Mindestbetrag einsetzt.

Weitere Merkmale und Vorteile der Erfindung werden bei der nachfolgenden Beschreibung eines Ausführungsbeispiels an Hand der Figuren deutlich werden.

Es zeigen:
- Fig. 1: Eine Anordnung mit der eine Rückenlehne beim Vorklappen zur Entriegelung der Feststellvorrichtung einer Sitzlängsverstellung auf ein Zugmittel einwirkt, bei im wesentlichen senkrecht hochgeklappter Rückenlehne;
- Fig. 2: die Anordnung aus Figur 1 bei in Richtung auf die Sitzfläche vorgeklappte Rückenlehne;
- Fig. 3: eine schematische Darstellung eines Kraftfahrzeugsitzes.

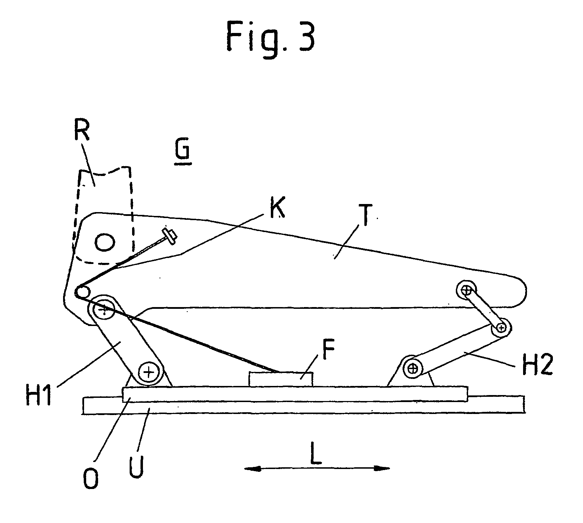

Figur 3 zeigt schematisch ein Gestell G eines Kraftfahrzeugsitzes mit einem Sitzseitenteil T, das über ein Hebelpaar H1, H2 höhenverstellbar mit der Oberschiene O einer Schienenlängsführung, bestehend aus zwei in Längsrichtung L zueinander verschiebbaren Schienen O, U, verbunden ist und das zur Aufnahme einer Sitzwanne mit Sitzpolster dient. Die Schienenlängsführung ist mittels einer Feststellvorrichtung F verriegelbar, so daß die aktuell eingestellte Sitzlängsposition fixiert wird. Die Feststellvorrichtung F ist aus Sicherheitsgründen in üblicher Weise mittels elastischer Elemente in Richtung auf ihren verriegelten Zustand vorgespannt, so daß die Sitzlängsposition stets fixiert ist, wenn nicht die Verriegelung der Feststellvorrichtung F entgegen der Wirkung der elastischen Element aktiv aufgehoben wird.

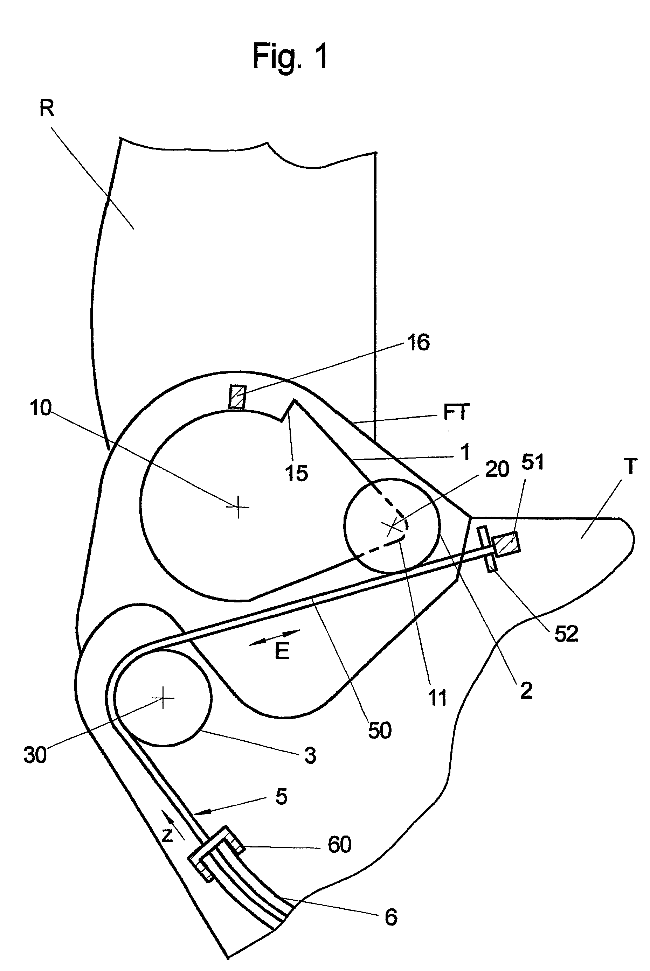

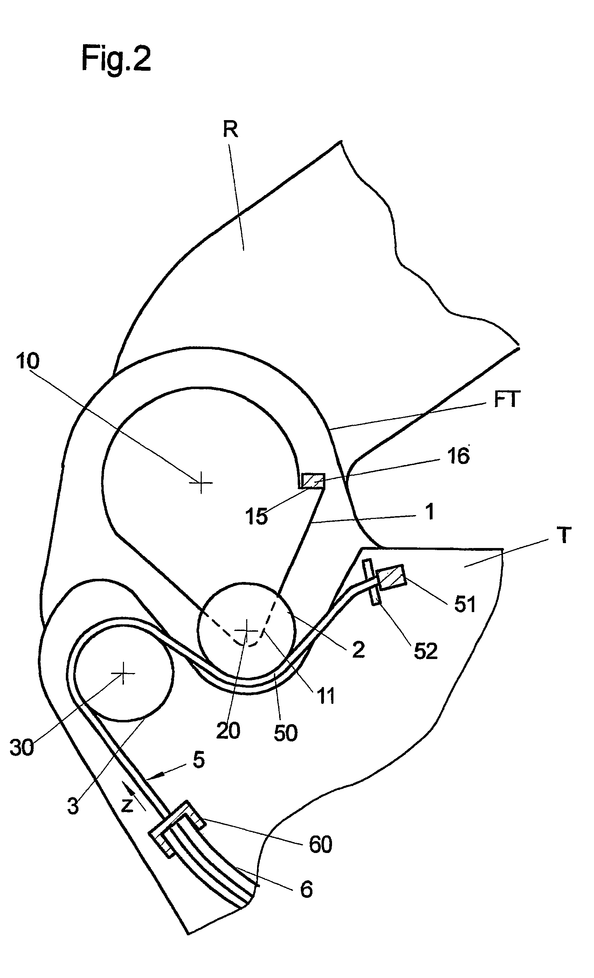

An dem Sitzseitenteil T ist schwenkbar eine Lehnengestell R einer Rückenlehne angelenkt, das einerseits in einem Gebrauchsbereich verschwenkbar ist, um die Lehnenneigung entsprechend den Erfordernissen des jeweiligen Sitzbenutzers einzustellen, und das andererseits in Richtung auf die Sitzfläche (bzw. das Sitzpolster) vorklappbar ist, um die Feststellvorrichtung F zu entriegeln und den Sitz mit vorgeklappter Rückenlehne zu verschieben (Easy-Entry-Funktion). Hierzu ist das Lehnengestell R über einen in Fig. 3 schematisch dargestellten Koppelmechanismus K mit der Feststellvorrichtung F gekoppelt, der nachfolgend anhand der Figuren 1 und 2 beschrieben werden wird. der erfindungsgemäßen, neuartigen Einwirkung des Lehnengestells R auf den Koppelmechanismus K, die nachfolgend anhand der Figuren 1 und 2 beschrieben werden wird) beispielsweise aus der WO 00/55002 A1 bekannt, so daß hier auf die Einzelheiten hinsichtlich der Ausbildung dieses Mechanismus nicht näher eingegangen wird. Diese sind in der WO 00/55002 A1 beschrieben.

Figur 1 zeigt einen Teil der Rückenlehne R eines Kraftfahrzeugsitzes gemäß Figur 3, die schwenkbar an einem Fortsatz FT eines Sitzseitenteiles T des Fahrzeugsitzes angelenkt ist. Die Rückenlehne R kann durch Verschwenken um ihre Schwenkachse einerseits in verschiedene Gebrauchspositionen eingestellt werden, die zum Abstützen des Rückenbereichs eines Fahrzeuginsassen dienen. Andererseits kann die Rückenlehne auch in Richtung auf die Sitzfläche vorgeklappt werden, um den an Hand Figur 3 erläuterten Easy-Entry-Mechanismus auszulösen.

In Figur 1 befindet sich die Rückenlehne R in einer Gebrauchsposition, in der sie im wesentlichen senkrecht aufgestellt ist.

An dem Fortsatz FT des Sitzseitenteiles T, an dem die Rückenlehne R schwenkbar gelagert ist, ist zugleich ein als Nocken ausgebildeter Körper 1 um eine Achse 10 verschwenkbar gelagert. Der schwenkbare Körper 1 weist einen Anschlag 15 auf, dem ein Mitnehmer 16 zugeordnet ist, der beim Vorklappen der Rückenlehne R in Richtung auf die Sitzfläche gemeinsam mit der Rückenlehne im Uhrzeigersinn verschwenkt wird und dabei schließlich mit dem Anschlag 15 in Eingriff gerät, so daß der schwenkbare Körper 1 beim weiteren Vorklappen der Rückenlehne R durch den Mitnehmer 16 über den Anschlag 15 mitgenommen, d.h. um seine Achse 10 verschwenkt wird.

An einer Nase 11 des schwenkbaren Körpers 1 ist um eine Achse 20 drehbar eine Rolle 2 gelagert. Unterhalb der Rolle 2 ist ein Abschnitt 50 eines Zugmittels 5 (z.B. in Form eines Seiles) geführt, das zur Koppelung der Rückenlehne R mit der Feststellvorrichtung einer Sitzlängsverstellung dient. Durch Straffung des Zugmittels 5 läßt sich die Feststellvorrichtung entriegeln, wozu das Zugmittel 5 mit einem Ende mit der Feststellvorrichtung in Verbindung steht. Das andere Ende 51 des Zugmittels 5 (lehnenseitiges Ende) ist als Nippel ausgebildet und über einen Anschlag 52 am Sitzseitenteil T eingehängt. Das Zugmittel 5 erstreckt sich mit seinem Abschnitt 50 unterhalb des schwenkbaren Körpers 1 zu einer am Sitzseitenteil um eine Achse 30 drehbar gelagerten Rolle 3 ("feststehende Rolle"), die als Umlenkelement dient und mittels der das Zugmittel in Richtung auf die zu betätigende Feststellvorrichtung umgelenkt wird. Entlang der Verbindungsstrecke von der Rolle 3 zu der zu betätigenden Feststellvorrichtung ist das Zugmittel in einer Bowdenhülle 6 geführt, die sich an einem am Sitzseitenteil T vorgesehenen Stützelement 60 abstützt.

Wird die Rückenlehne R aus ihrer in Figur 1 gezeigten, im wesentlichen senkrechte Position in Richtung auf die Sitzfläche des Sitzes vorgeklappt, so nimmt die in Figur 1 dargestellte Anordnung den in Figur 2 dargestellten Zustand ein.

Beim Vorklappen der Rückenlehne R wird der in geeigneter Weise mit der Rückenlehne R verbundene und zunächst von dem Anschlag 15 des schwenkbaren Körpers 1 beabstandete Mitnehmer 16 (im Uhrzeigersinn) bewegt und trifft dadurch nach einem bestimmten Schwenkwinkel auf den Anschlag 15 auf. Erst in diesem Moment setzt eine (Schwenk-) Bewegung des Körpers 1 ein, der durch den Mitnehmer 16 und dem zugeordneten Anschlag 15 mitgenommen wird und somit zusammen mit der Rückenlehne R verschwenkt wird. Der schwenkbare Körper 1 kann mittels eines elastischen Elementes (nicht dargestellt) in Richtung auf seine in Fig. 1 gezeigte Lage vorgespannt sein (in der er nicht auf das Zugmittel 5 einwirkt), so daß er durch den Mitnehmer 16 entgegen dieser Vorspannkraft mitgenommen wird, wenn die Rückenlehne vorgeklappt wird, und dadurch auf einen Abschnitt 50 des Zugmittels 5 einwirkt.

Beim Verschwenken des Körpers 1 im Uhrzeigersinn (entsprechend dem Vorklappen der Rückenlehne R) wird dessen Nase 11 mit der daran drehbar gelagerten Rolle 2 in Richtung auf den unterhalb des Körpers 1 erstreckten Abschnitt 50 des flexiblen Zugmittels 5 bewegt. Die Rolle 2 wirkt dabei mit einer Kraftkomponente, die senkrecht zur Erstreckungsrichtung des genannten Abschnittes 50 des Zugmittels 5 verläuft, auf dieses ein. Das Zugmittel 5 wird dabei jeweils in geeigneten Führungsrinnen der Rollen 2, 3 geführt. Zusätzlich können auch an dem Sitzseitenteil weitere Führungsmittel vorgesehen sein, um den unterhalb der drehbar gelagerten Rolle 2 verlaufenden Abschnitt 50 des Zugmittels 5 entlang einer definierten Bahn zu führen, so daß jene Rolle 2 hierauf einwirken kann.

Hierdurch wird der besagte Abschnitt 50 des Zugmittels 5 gekrümmt und das Zugmittel insgesamt gestrafft. Auf den in der Bowdenhülle 6 geführten Teil des Zugmittels 5 wirkt somit eine Kraft entlang einer Zugrichtung Z hin zu der zur Umlenkung des Zugmittels 5 dienende Seilrolle 3 (und damit weg von der Feststellvorrichtung der Sitzlängsverstellung). Hierdurch wird die Feststellvorrichtung der Sitzlängsverstellung, wie aus dem Stand der Technik bekannt, entriegelt, indem die Verriegelungselemente der Feststellvorrichtung entgegen der Wirkung elastischer Elemente aus ihrer Verriegelungsposition ausgehoben werden.

Von Bedeutung ist vorliegend, daß zur Straffung des Zugmittels 5 - im Gegensatz zu den aus dem Stand der Technik bekannten Anordnungen - keine Kraft auf das lehnenseitige Ende 51 des Zugmittels 5 in Erstreckungsrichtung des entsprechenden Abschnitt 50 des Zugmittels 5 ausgeübt wird. Das lehnenseitige Ende 51 des Zugmittels 5 ist vielmehr räumlich fixiert und wird beim Vorklappen der Rückenlehne nicht bewegt. Statt dessen erfolgt eine Einwirkung eines Betätigungselementes auf einen Abschnitt 50 des Zugmittels 5 senkrecht zu dessen Erstreckungsrichtung, durch die dieser Abschnitt gekrümmt wird. Dies hat eine Straffung des Zugmittels 5 zur Folge (entsprechend einer Verkürzung der effektiven Länge des Zugmittels), durch die die Feststellvorrichtung der Sitzlängsverstellung entriegelt werden kann. Um das Zugmittel 5 mit seinem in der Bowdenhülle 6 geführten Abschnitt um einen bestimmten Betrag in Zugrichtung Z zu verschieben, der zur Entriegelung der Feststellvorrichtung ausreicht, bedarf es eines größeren Verstellweges der auf das Zugmittel 5 einwirkenden Rolle 2 verglichen mit einem Betätigungselement, das mit einer Zugkraft unmittelbar auf das lehnenseitige Ende 51 des Zugmittels 5 einwirkt. Da die zur Überwindung der Vorspannkraft der elastischen Elemente der Feststellvorrichtung aufzubringende Arbeit in beiden Fällen dieselbe ist, bedeutet dies, daß bei der vorliegenden Lösung eine geringere Kraft aufzubringen ist.

## Patentansprüche

1. Kraftfahrzeugsitz mit
- einer schwenkbar gelagerten Rückenlehne (R), die in Richtung auf eine Sitzfläche des Sitzes vorklappbar ist,
- einer Sitzlängsverstellung, mit der die Längsposition des Sitzes einstellbar ist,
- einer Feststellvorrichtung (F) der Sitzlängsverstellung, mit der eine zuvor eingestellte Sitzlängsposition verriegelbar ist,
- einem Entriegelungsmechanismus, mit dem die Feststellvorrichtung (F) entriegelbar ist, und
- einem flexiblen Zugmittel (5), über das der Entriegelungsmechanismus mit der Rückenlehne (R) gekoppelt ist, so dass die Feststellvorrichtung (F) beim Vorklappen der Rückenlehne (R) entriegelt wird,
**dadurch gekennzeichnet,**
**dass** das Zugmittel (5) im Bereich seines lehnenseitigen Endes (51) an einer Befestigungsstelle (52) am Sitz festgelegt ist, die beim Vorklappen der Rückenlehne (R) nicht bewegt wird, und dass beim Vorklappen der Rückenlehne (R) ein Betätigungselement (2) auf das Zugmittel (5) mit einer Kraftkomponente quer zur Erstreckungsrichtung (E) des Zugmittels (5) einwirkt, so dass die Feststellvorrichtung (F) entriegelt wird.

2. Kraftfahrzeugsitz nach Anspruch 1, **dadurch gekennzeichnet, dass** das Betätigungselement (2) auf einen Abschnitt (50) des Zugmittels (5) einwirkt, der von dem lehnenseitigen Ende (51) des Zugmittels (5) beabstandet ist.

3. Kraftfahrzeugsitz nach Anspruch 1 oder 2, **dadurch gekennzeichnet, dass** das Betätigungselement (2) rotationssymmetrisch ausgebildet ist.

4. Kraftfahrzeugsitz nach einem der vorhergehenden Ansprüche, **dadurch gekennzeichnet**, das das Betätigungselement (2) drehbar gelagert ist.

5. Kraftfahrzeugsitz nach Anspruch 3 oder 4, **dadurch gekennzeichnet, dass** das Betätigungselement (2) durch eine Rolle gebildet wird.

6. Kraftfahrzeugsitz nach Anspruch 3 oder 4, **dadurch gekennzeichnet, dass** das Betätigungselement (2) durch einen Abschnitt einer Achse gebildet wird.

7. Kraftfahrzeugsitz nach einem der vorhergehenden Ansprüche, **dadurch gekennzeichnet, dass** Betätigungselement (2) durch eine Sitzkomponente gebildet wird, die noch eine andere Funktion als die Straffung des Zugmittels aufweist.

8. Kraftfahrzeugsitz nach einem der Ansprüche 1 bis 3, **dadurch gekennzeichnet, dass** das Betätigungselement (2) durch einen Gleiter gebildet wird, der vorzugsweise aus Kunststoff besteht.

9. Kraftfahrzeugsitz nach einem der vorstehenden Ansprüche, **dadurch gekennzeichnet, dass** beim Vorklappen der Rückenlehne (R) mindestens zwei Betätigungselemente auf das Zugmittel einwirken.

10. Kraftfahrzeugsitz nach einem der vorhergehenden Ansprüche, **dadurch gekennzeichnet, dass** ein Umlenkelement (3) vorgesehen ist, mit dem das Zugmittel (5) derart umgelenkt wird, dass ein Abschnitt (50) des Zugmittels (5) winkelig, insbesondere senkrecht zur Wirkrichtung des Betätigungselementes (2) verläuft.

11. Kraftfahrzeugsitz nach einem der vorhergehenden Ansprüche, **dadurch gekennzeichnet, dass** das Betätigungselement (2) beim Vorklappen der Rückenlehne (R) derart bewegt, insbesondere verschwenkt wird, dass es mit dem Zugmittel (5) in Eingriff tritt.

12. Kraftfahrzeugsitz nach Anspruch 11, **dadurch gekennzeichnet, dass** das Betätigungselement (2) an einem beim Vorklappen der Rückenlehne (R) verschwenkbaren Körper (1) gelagert ist.

13. Kraftfahrzeugsitz nach einem der vorhergehenden Ansprüche, **dadurch gekennzeichnet, dass** die Rückenlehne (R) beim Vorklappen mit einem Mitnehmer (16) auf einen dem Betätigungselement (2) zugeordneten Anschlag (15) einwirkt, um dieses mit dem Zugmittel (5) in Eingriff zu bringen.

14. Kraftfahrzeugsitz nach Anspruch 13 , **dadurch gekennzeichnet, dass** die Rückenlehne (R) beim Vorklappen aus einer Gebrauchsposition erst dann mit dem Mitnehmer (16) auf den Anschlag (15) einwirkt, nachdem die Rückenlehne (R) um einen definierten Winkel vorgeklappt worden ist.

15. Kraftfahrzeugsitz nach Anspruch 12 und Anspruch 13 oder 14, **dadurch gekennzeichnet, dass** der Anschlag (15) an dem verschwenkbaren Körper (1) vorgesehen ist.

16. Kraftfahrzeugsitz nach einem der vorhergehenden Ansprüche, **dadurch gekennzeichnet, dass** Führungsmittel vorgesehen sind, um das Zugmittel (5) im Bereich des Betätigungselementes (2) zu führen.

## Claims

1. Motor vehicle seat with
- a swivel mounted backrest (R) which can be folded forwards towards a seat surface of the seat
- a seat longitudinal adjuster by which the longitudinal position of the seat can be set;
- a fixing device (F) for the seat longitudinal adjuster by which a previously set seat longitudinal position can be locked;
- a release mechanism by which the fixing device (F) can be released; and
- a flexible traction means (5) through which the release mechanism is coupled to the backrest (R) so that the fixing device (F) is released when the backrest (R) is folded forwards,
**characterised in that**
the traction means (5) are fixed in the end area (51) on the backrest side to a fixing point (52) on the seat which is not moved when the backrest (R) is folded forwards, and that when folding the backrest (R) forwards an actuating element (2) acts on the traction means (5) with a force component transversely to the extension direction (E) of the traction means (5) so that the fixing device (F) is released.

2. Motor vehicle seat according to claim 1, **characterised in that** the actuating element (2) acts on a section (50) of the traction means (5) which is spaced from the backrest side end (51) of the traction means (5).

3. Motor vehicle seat according to claim 1 or 2, **characterised in that** the actuating element (2) is rotationally symmetrical.

4. Motor vehicle seat according to one of the preceding claims, **characterised in that** the actuating element (2) is mounted rotatable.

5. Motor vehicle seat according to claim 3 or 4, **characterised in that** the actuating element (2) is formed by a roller.

6. Motor vehicle seat according to claim 3 or 4, **characterised in that** the actuating element (2) is formed by a section of an axis.

7. Motor vehicle seat according to one of the preceding claims, **characterised in that** the actuating element (2) is formed by seat components which have another function other than tightening the traction means.

8. Motor vehicle seat according to one of claims 1 to 3, **characterised in that** the actuating element (2) is formed by a slider, which is preferably made of plastics.

9. Motor vehicle seat according to one of the preceding claims, **characterised in that** when folding the backrest (R) forwards at least two actuating elements act on the traction means.

10. Motor vehicle seat according to one of the preceding claims, **characterised in that** a guide element (3) is provided with which the traction means (5) are deflected so that a section (50) of the traction means (5) run at an angle, preferably perpendicular to the active direction of the actuating element (2).

11. Motor vehicle seat according to one of the preceding claims, **characterised in that** the actuating element (2) when folding the backrest (R) forwards is moved, more particularly swivelled so that it engages with the traction means (5).

12. Motor vehicle seat according to claim 11, **characterised in that** the actuating element (2) is mounted on a body (1) which can swivel when folding the backrest (R) forwards.

13. Motor vehicle seat according to one of the preceding claims, **characterised in that** the backrest (R) when folding forwards acts by a follower (16) on a stop (15) which is associated with the actuating element (2) in order to bring this into engagement with the traction means (5).

14. Motor vehicle seat according to claim 13, **characterised in that** the backrest (R) when folding forwards from a useful position only then acts by the follower (16) on the stop (15) after the backrest (R) has been folded forwards about a defined angle.

15. Motor vehicle seat according to claim 12 and claim 13 or 14, **characterised in that** the stop (15) is provided on the pivotal body (1).

16. Motor vehicle seat according to one of the preceding claims, **characterised in that** guide means are provided to guide the traction means (5) in the region of the actuating element (2).

## Revendications

1. siège de véhicule automobile comportant
- un dossier monté pivotant (R), qui peut être rabattu vers l'avant en direction d'une surface d'assise du siège,
- une unité de réglage longitudinal du siège, à l'aide duquel la position longitudinale du siège est réglable,
- un dispositif de blocage (F) de l'unité de réglage longitudinal du siège à l'aide duquel une position longitudinale du siège, réglée au préalable, peut être verrouillée,
- un mécanisme de déverrouillage, à l'aide duquel le dispositif de blocage (F) peut être déverrouillé, et
- un moyen d'accès flexible (5) au moyen duquel le mécanisme de déverrouillage est couplé au dossier (R), de sorte que le dispositif de blocage (F) est déverrouillé lors du rabattement du dossier (R) vers l'avant,
**caractérisé en ce**
**que** le moyen de traction (5) est fixé, au niveau de son extrémité (51) côté dossier, en un point de fixation (52) sur le siège, qui, lors du rabattement du dossier (R) vers l'avant, ne se déplace pas et que lors du rabattement du dossier (R) vers l'avant, un élément d'actionnement (2) agit sur le moyen de traction (5) avec une composante de force transversale par rapport à la direction (E) dans laquelle s'étend le moyen de traction (5), de sorte que le dispositif de blocage (F) est déverrouillé.

2. Siège de véhicule automobile selon la revendication 1, **caractérisé en ce que** l'élément d'actionnement (2) agit sur une section (50) du moyen de traction (5), qui est distant de l'extrémité (51), côté dossier, du moyen de traction (5).

3. Siège de véhicule automobile selon la revendication 1 ou 2, **caractérisé en ce que** l'élément d'actionnement (2) est réalisé avec une symétrie de révolution.

4. Siège de véhicule automobile selon l'une des revendications précédentes, **caractérisé en ce que** l'élément d'actionnement (2) est monté de manière à pouvoir tourner.

5. Siège de véhicule automobile selon la revendication 3 ou 4, **caractérisé en ce que** l'élément d'actionnement (2) est formé par un rouleau.

6. Siège de véhicule automobile selon la revendication 3 ou 4, **caractérisé en ce que** l'élément d'actionnement (2) est formé par une section d'un axe.

7. Siège de véhicule automobile selon l'une des revendications précédentes, **caractérisé en ce que** l'élément d'actionnement (2) est formé par un composante du siège, qui possède en outre une autre fonction que la mise en tension du moyen de traction.

8. Siège de véhicule automobile selon l'une des revendications 1 à 3, **caractérisé en ce que** l'élément d'actionnement (2) est formé par un coulisseau, qui est réalisé de préférence en matière plastique.

9. Siège de véhicule automobile selon l'une des revendications précédentes, **caractérisé en ce que** lors du rabattement du dossier (R) vers l'avant, au moins deux éléments d'actionnement agissent sur le moyen de traction.

10. Siège de véhicule automobile selon l'une des revendications précédentes, **caractérisé en ce qu'**il est prévu un élément de renvoi (3), avec lequel le moyen de traction (5) est dévié de telle sorte qu'une section (50) du moyen de traction (5) s'étend notamment selon une disposition oblique, notamment perpendiculairement à la direction d'action de l'élément d'actionnement (2).

11. Siège de véhicule automobile selon l'une des revendications précédentes, **caractérisé en ce que** lors du rabattement du dossier (R) vers l'avant, un élément d'actionnement (2) est déplacé, notamment par pivotement, de manière à coopérer avec le moyen de traction (5).

12. Siège de véhicule automobile selon la revendication 11, **caractérisé en ce que** l'élément d'actionnement (2) est monté sur un corps (1) pouvant pivoter lors du rabattement du dossier (R) vers l'avant.

13. Siège de véhicule automobile selon l'une des revendications précédentes, **caractérisé en ce que** lors du rabattement vers l'avant, le dossier (R) agit par un organe d'entraînement (16) sur une butée (15) associé à l'élément d'actionnement (2), pour mettre en prise cette dernière avec le moyen de traction (5).

14. Siège de véhicule automobile selon la revendication 13, **caractérisé en ce que** lors du rabattement vers l'avant à partir d'une position d'utilisation, le dossier (R) agit avec l'organe d'entraînement (16) sur la butée (15) uniquement après que le dossier (R) a été rabattu vers l'avant sur un angle défini.

15. Siège de véhicule automobile selon la revendication 12 et la revendication 13 ou 14, **caractérisé en ce que** la butée (15) est prévue sur le corps pouvant pivoter (1).

16. Siège de véhicule automobile selon l'une des revendications précédentes, **caractérisé en ce que** des moyens de guidage sont prévus afin de guider le moyen de traction (5) dans la zone de l'élément d'actionnement (2).
